# EUROPÄISCHE PATENTANMELDUNG

(11) **EP 2 141 561 A1**
(43) Veröffentlichungstag der Anmeldung: **06.01.2010**
(21) Anmeldenummer: 08011812.8
(22) Anmeldetag: 30.06.2008
(51) Int. Cl.: G05B 19/042, G05B 19/418

(54) **Automatisierungskomponente und Automatiesierungssystem**

(71) Anmelder: Siemens Aktiengesellschaft, 80333 München (DE)
(72) Erfinder: Donderer, Markus, 92224 Amberg (DE); Kroemer, Rene, 09337 Hohenstein-Ernstthal (DE)

(57) **Zusammenfassung**

Die Erfindung betrifft eine Automatisierungskomponente mit zumindest einer ersten Datenschnittstelle (31) und einer zweiten Datenschnittstelle (32) zum Verschalten von weiteren Automatisierungskomponenten in einer Linienstruktur. Um bei Einsatz von Ein-/Ausgabebaugruppen (30, 40, 50) den durchgängigen Einsatz von 1:1 verdrahteten Datenleitungen (33, 44, 55) zu ermöglichen und dabei zusätzlich noch eine Reaktionszeit für die Entgegennahme von Datensignalen der Ein-/Ausgabebaugruppen (30, 40, 50) zu erhöhen, wird erfindungsgemäß vorgeschlagen, eine Datenschnittstelle (31) mit einer MDI-Belegung und eine zweite Datenschnittstelle (32) mit einer MDIX-Belegung zu versehen.

## Beschreibung

Die Erfindung betrifft eine Automatisierungskomponente mit zumindest einer ersten Datenschnittstelle und einer zweiten Datenschnittstelle zum Verschalten von weiteren Automatisierungskomponenten in einer Linienstruktur.

Des Weiteren betrifft die Erfindung ein Automatisierungssystem zum Automatisieren eines industriellen Prozesses, umfassend eine Steuerung, zumindest eine erste Ein-/Ausgabegruppe und eine zweite Ein-/Ausgabebaugruppe, eine erste Datenleitung, eine zweite Datenleitung und Kommunikationsmittel, über welche die Steuerung mittels der ersten Datenleitung über eine erste Datenschnittstelle der ersten Ein-/Ausgabegruppe mit dieser in Verbindung steht, wobei eine zweite Datenschnittstelle der ersten Ein-/Ausgabebaugruppe über eine zweite Datenleitung mit einer dritten Datenschnittstelle der zweiten Ausgabebaugruppe verbunden ist. Unter Automatisierungskomponenten sind beispielsweise Frequenzumrichter, Bedienterminals, Steuerungen, Aktoren, Sensoren, RFID-Schreib-/Lesegeräte, Funktionsmodule usw. zu verstehen. Diese Komponenten weisen wiederum Ein-/Ausgabebaugruppen zum Empfang bzw. zum Senden von Prozesssignalen auf. Es spielt dabei keine Rolle, ob die Komponenten als beispielsweise dezentrale Kompaktgeräte oder beispielsweise Interfacemodule für modulare Systeme ausgestaltet sind.

Bei Automatisierungsgeräten mit beispielsweise Ethernet-Schnittstellen auf der Basis von Twisted-Pair-Kabeln gibt es unterschiedliche Belegungen der geräteseitigen Datenschnittstellen. Die unterschiedliche Belegung, beispielsweise RJ45- oder M12-Ethernet-Buchsen, wurde eingeführt, da bei EthernetKabeln eine Sendeleitung (TX) jeweils auf eine Empfangsleitung (RX) eines Kommunikationspartners verdrahtet werden muss und Ethernet-Kabel gängigerweise 1:1 verdrahtet sind.

Aufgrund dieser Technologie wurden auch bei Endgeräten, beispielsweise Data Terminal Equipment, und Switches eine unterschiedliche Belegung der geräteseitigen Datenschnittstellen eingeführt. Diese unterschiedliche Belegung der Datenschnittstellen ermöglicht die Kreuzverbindung einer Sendeleitung auf eine Empfangsleitung. Diese Belegungen werden auch als MDI (Medium Dependent Interface) und MDIX (Medium Dependent Interface mit Crossover) bezeichnet. In der Regel weisen Endgeräte, wie z.B. ein PC, eine MDI-Belegung auf. Switches hingegen weisen üblicherweise mehrere Datenschnittstellen oder auch Ports genannt mit einer MDIX-Belegung auf.

In der Automatisierungstechnik kommen zunehmend so genannte Real-Time-Ethernets zum Einsatz. Eine Ausprägung eines Real-Time-Ethernet-Datennetzwerks ist z.B. ein "Profinet"-Netzwerk. Bei derartigen Real-Time-Ethernet-Datennetzwerken werden Endgeräte und Automatisierungsgeräte mit einer so genannen Auto-Negotiation-Funktion eingesetzt. Bei dieser Auto-Negotiation-Funktion handelt es sich um einen Kommunikationsmechanismus, welcher ein automatisches Aushandeln von Kommunikationsregeln für die Datenschnittstellen ermöglicht. Dieser Kommunikationsmechanismus enthält eine Auto-Crossover-Funktion. Bei dieser Auto-Crossover-Funktion handeln die Geräte für die Datenschnittstellen nach einem vorgegebenen Mechanismus aus, welches Gerät an seiner jeweiligen Datenschnittstelle intern die Belegung für eine Sendeleitung (TX) und eine Empfangsleitung (RX) dreht. Aus diesem Grund werden heute durchgängig für Automatisierungslösungen 1:1 verdrahtete Ethernetkabel eingesetzt.

Nachteilig an dieser Art der Verdrahtung ist es allerdings, dass der Kommunikationsmechanismus, welcher die Auto-Crossover-Funktion beinhaltet, bei den Geräten für die Datenschnittstellen aktiviert sein muss. Diese Aktivierung des Kommunikationsmechanismus hat wiederum zum Nachteil, dass bei Hochlauf eines aus solchen Geräten zusammengestellten Systems eine Reaktionszeit erheblich vermindert wird. Der Zeitaufwand für die Durchführung des Kommunikationsmechanismus mit der Funktion Auto-Crossover beträgt beispielsweise ca. 1,5 s. Diese Zeit steht also für eine Abfrage von möglichen Ein- und Ausgängen der Automatisierungsgeräte nicht zur Verfügung. Bei so genannten Fast-Startup-Anwendungen, z.B. ein Werkzeugwechsler, ist es wünschenswert, auf diese "Verzögerungszeit" zu verzichten, weil damit die Taktzeit der Anlage verbessert werden kann.

Es ist daher die Aufgabe der Erfindung, die eingangs genannte Automatisierungskomponente derart auszugestalten, dass auf die erwähnte Verzögerungszeit verzichtet werden kann. Weiterhin ist es die Aufgabe der Erfindung, das eingangs genannte Automatisierungssystem dahingehend zu ertüchtigen, dass ebenfalls auf die eingangs genannte Verzögerungszeit verzichtet werden kann bzw. eine schnellere Reaktionszeit erreicht werden kann.

Wenn die Auto-Crossover-Funktion des Kommunikationsmechanismus abgeschaltet wird, ohne dass die Geräte, wie es die Erfindung zeigen wird, ausgestaltet sind, müssten weiterhin so genannte Crossover-Datenleitungen zwischen den Geräten eingesetzt werden. Dadurch bedingt müssen bei einem Aufbau von Automatisierungssystemen zweierlei unterschiedliche Datenleitungen verwendet werden, welches nicht wünschenswert ist.

Die Aufgabe eine günstigere Reaktionszeit nach Hochlauf ohne den Einsatz von Crossover-Datenleitungen für eine Automatisierungskomponente bzw. für ein Automatisierungssystem zu erreichen, wird für die eingangs genannte Automatisierungskomponente dadurch gelöst, dass eine erste Signalbelegung für die erste Datenschnittstelle eine MDI-Belegung und eine zweite Signalbelegung für die zweite Datenschnittstelle eine MDIX-Belegung aufweist. Bei Einsatz solcher Automatisierungskomponenten können weiterhin 1:1 verdrahtete Ethernet-Datenleitungen zum Einsatz kommen.

Eine bevorzugte Ausführungsform der Automatisierungskomponente ist es, wenn ein Kommunikationsmechanismus innerhalb der Ein-/Ausgabebaugruppe inaktiv konfiguriert ist. Dieser Kommunikationsmechanismus ermöglicht ein automatisches Aushandeln von Kommunikationsregeln zwischen den Automatisierungskomponenten. Das Aushandeln kostet allerdings Zeit und eine Deaktivierung dieses Kommunikationsmechanismus für die erste und die zweite Datenschnittstelle führt zur Verkürzung einer Reaktionszeit der Automatisierungskomponenten. Derartige Automatisierungskomponenten können dann vorteilhaft bei den genannten Fast-Startup-Anwendungen eingesetzt werden.

Diese Automatisierungskomponenten weisen vorzugsweise Mittel zur Ein- und Ausgabe von Datensignalen aus einem Automatisierungsprozess auf. Insbesondere bei Profibus- oder Profinet-Anwendungen können diese Automatisierungskomponenten als dezentrale Peripherie, insbesondere an Stellen, wo eine hohe und schnelle Datenerfassung erforderlich ist, eingesetzt werden.

Hinsichtlich der Datenerfassung sind die Mittel zur Ein- und Ausgabe, vorzugsweise als eine erste Ein-/Ausgabebaugruppe, für eine Werkzeug-Wechseleinheit ausgestaltet.

Vorteilhafterweise lassen sich bei der Automatisierungskomponente für die Datenschnittstellen Datenleitungen mit Datenstecker verwenden, welche nach einer 1:1-Beschaltungsvorschrift ausgestaltet sind.

Bei dem eingangs genannten Automatisierungssystem wird die Aufgabe dadurch gelöst, dass eine erste Signalbelegung für die erste Datenschnittstelle eine MDI-Belegung und eine zweite Signalbelegung für die zweite Datenschnittstelle eine MDIX-Belegung aufweist. Mit dieser Ausgestaltung der Datenschnittstellen lässt sich ein komplettes Automatisierungssystem mit einer Art von Datenleitungen, nämlich den 1:1 verdrahteten Ethernet-Datenleitungen, aufbauen.

Vorzugsweise wird ein Kommunikationsmechanismus innerhalb der Ein-/Ausgabebaugruppen, welcher ein automatisches Aushandeln von Kommunikationsregeln ermöglicht, für die erste und die zweite Datenschnittstelle zur Verkürzung einer Reaktionszeit inaktiv konfiguriert. Durch die Kombination der Datenschnittstellen zu einer ersten Datenschnittstelle mit einer MDI-Belegung und zu einer zweiten Datenschnittstelle mit einer MDIX-Belegung mit dem Inaktiv-Schalten des Kommunikationsmechanismus kann eine minimale Reaktionszeit von Ein-/Ausgabebaugruppen in dem Automatisierungssystem erreicht werden.

Vorzugsweise wird insbesondere im Hinblick auf eine dezentrale Peripherie eine Vielzahl von Ein-/Ausgabebaugruppen über ihre jeweils zwei Datenschnittstellen zu einer Linienstruktur kaskadenartig angeordnet. Diese kaskadenartige Anordnung kann sich in ihrer Linienstruktur quer durch die Feldebene eines weit ausgedehnten Industrieprozesses ziehen.

In einer ersten alternativen Ausgestaltungsvariante des Automatisierungssystems ist zwischen der Steuerung und der ersten Ein-/Ausgabebaugruppe ein Schnittstellenmodul mit einem Moduleingang und einem Modulausgang angeordnet, wobei der Modulausgang mit einer MDIX-Belegung und einem inaktiven Kommunikationsmechanismus ausgestaltet ist, welcher normalerweise ein automatisches Aushandeln von Kommunikationsregeln ermöglicht, und der Moduleingang mit einer MDI-Belegung mit einem aktiven Kommunikationsmechanismus ausgestaltet ist. Auch bei dieser Art des Automatisierungssystems können ausgehend von der Steuerung bis tief in die Feldebene durchgängig 1:1 verdrahtete Ethernet-Datenleitungen eingesetzt werden. Bei dem Schnittstellenmodul besteht keine Einschränkung auf eine bestimmte Art von Schnittstellenmodulen, es kann eine Kommunikationsbaugruppe, eine weitere Steuerung, oder generell ein Kommunikationselement zum Verbinden der Linienstruktur mit der Steuerung.

Vorzugsweise ist bei der oben genannten Variante zwischen der Steuerung und dem Schnittstellenmodul zur Anpassung einer Steuerungsschnittstelle an den Moduleingang ein Adapter angeordnet. Der Adapter findet Anwendung wenn beispielsweise von einem Ethernetkabel aus der "Büro-Ebene" mit der Schutzklasse IP20 auf ein Ethernetkabel der Feldebene mit der Schutzklasse IP65 gewechselt wird. Der Adapter könnte auch zusätzlich das Adernpaar in den Ethernetkabeln drehen.

In einer zweiten alternativen Ausgestaltungsform des Automatisierungssystems ist zwischen der Steuerung und der ersten Ein-/Ausgabebaugruppe ein Switch mit einem dritten Port und einem vierten Port angeordnet, wobei der vierte Port mit einer MDIX-Belegung und einem inaktiven Kommunikationsmechanismus ausgestaltet ist, und der dritte Port mit einer MDIX-Belegung mit einem aktiven Kommunikationsmechanismus ausgestaltet ist.

Zusammenfassend kann gesagt werden, dass bei Automatisierungskomponenten oder Ein-/Ausgabebaugruppen eine erste Datenschnittstelle bzw. ein erster Port mit einer MDIX-Belegung und die zweite Datenschnittstelle bzw. der zweite Port mit einer MDIX-Belegung ausgestattet ist, um weiterhin durchgängig 1:1 verdrahtete Ethernet-Datenleitungen verwenden zu können. Eine Verdrahtungsregel könnte demnach darin bestehen, dass ein Inbetriebsetzer immer einen Port mit einer MDIX-Belegung mit einem Port mit einer MDIX-Belegung verbinden muss. Diese Belegung könnte vorzugsweise am Gerät an den Schnittstellen durch entsprechende Symbole gekennzeichnet sein. Bei einem Linienstrukturaufbau von einer Vielzahl von beispielsweise Peripherie-Ein-/Ausgabebaugruppen kann die einfache Regel angewendet werden, dass Port 2 des Vorgängergerätes immer auf Port 1 des nachfolgenden Gerätes verdrahtet werden muss, was die Inbetriebsetzung und den Aufbau eines derartig ausgestalteten Automatisierungssystems erheblich vereinfacht. Für eine reibungslose Kommunikation ist dabei vorzugsweise der zur Linienstruktur gerichtete Port bzw. die Datenschnittstelle eines zwischen der Steuerung und der Linienstruktur angeordneten Zwischenkommunikationsmitteln wie das Schnittstellenmodul oder der Switch als hinsichtlich ihres Kommunikationsmechanismus als inaktiv konfiguriert.

Weitere Erläuterungen und Merkmale zu der Erfindung sind der Zeichnung, für ein Ausführungsbeispiel zu entnehmen. Es zeigen:
- FIG 1: ein Aufbau eines Automatisierungssystems für einen Werkzeugwechsler, und
- FIG 2: einen alternativen Aufbau eines Automatisierungssystems für einen Werkzeugwechsler.

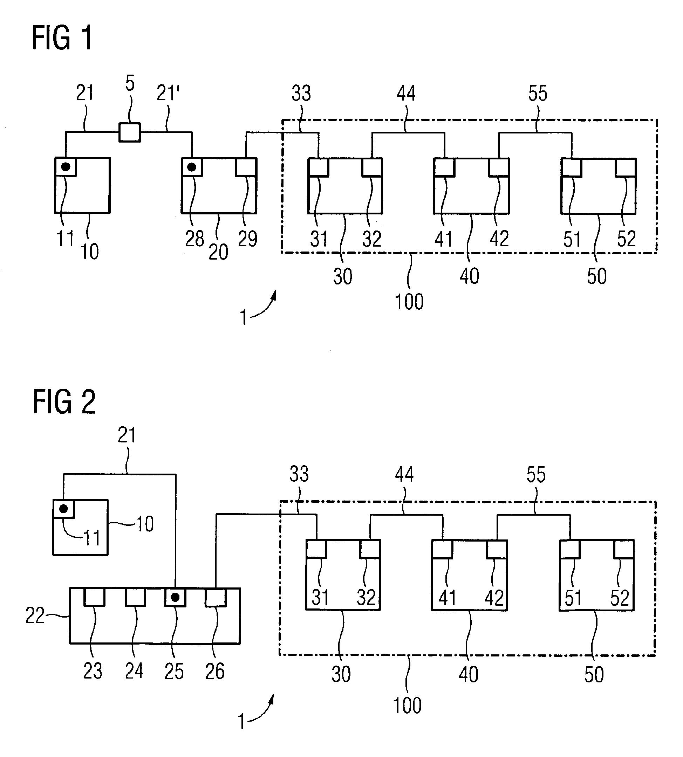

Gemäß Figur 1 ist ein Automatisierungssystem 1 für einen Werkzeugwechsler 100 dargestellt. Der Werkzeugwechsler 100 weist eine erste Ein-/Ausgabebaugruppe 30, eine zweite Ein-/Ausgabebaugruppe 40 und eine dritte Ein-/Ausgabebaugruppe 50 auf. Die drei Ein-/Ausgabebaugruppen 30, 40, 50 sind als dezentrale Peripheriedatenmodule ausgestaltet und ermöglichen eine Ausgabe von Datensignalen an Aktoren bzw. ein Erfassen von Datensignalen von Sensoren. Der Werkzeugwechsler 100 ist ein räumlich ausgedehntes System, bei welchem an unterschiedlich entfernten Stellen unterschiedliche Datensignale erfasst werden müssen; deshalb werden hier mit Vorteil dezentrale Peripheriekomponenten eingesetzt. Die über die Ein-/Ausgabebaugruppen 30, 40, 50 erfassten Datensignale werden mittels eines Schnittstellenmoduls 20 und Datenleitungen an eine Steuerung 10 weitergeleitet. Diese Steuerung 10 kann über die Datenleitungen 21, 21', 33 und das Schnittstellenmodul 20 Ausgabesignale an die Ein-/Ausgabebaugruppen 30, 40, 50 in den Werkzeugwechsler 100 senden bzw. Daten von ihm empfangen. In der Steuerung 10 läuft ein Programm ab, welches das Erfassen bzw. das Ausgeben der Daten für den Werkzeugwechsler 100 koordiniert.

Zum Aufbau einer Linienstruktur für die Ein-/Ausgabebaugruppen 30, 40, 50 wird exemplarisch am Beispiel der ersten Ein-/Ausgabebaugruppe 30 die Ausgestaltung einer ersten Datenschnittstelle 31 und einer zweiten Datenschnittstelle 32 der Ein-/Ausgabebaugruppe 30 erklärt. Die erste Datenschnittstelle 31 ist als eine MDI-Schnittstelle, also eine Datenschnittstelle mit einer Belegung der Signalleitungen nach der MDI-Vorgabe, ausgestaltet. Die zweite Datenschnittstelle 32 der ersten Ein-/Ausgabebaugruppe 30 ist hinsichtlich ihrer Signalleitungen nach einer MDIX-Belegung ausgestalet. Die Ausgestaltungsvarianten nach MDI und MDIX gilt jeweils für die sich in einer Reihenschaltung mit der ersten Ein-/Ausgabebaugruppe 30 befindlichen zweiten Ein-/Ausgabebaugruppe 40 und der dritten Ein-/Ausgabebaugruppe 50. Demnach ist die zweite Datenschnittstelle 32 mit der ersten Datenschnittstelle 41 mit einer 1:1 verdrahteten zweiten Datenleitung 44 verbunden. Der Einsatz der 1:1 verdrahteten zweiten Datenleitung 44 wird durch die unterschiedliche Belegung der zweiten Datenschnittstelle 32 zu der dritten Datenschnittstelle 41 ermöglicht. Um die Anschaltung der dritten Ein-/Ausgabebaugruppe 50 an die bereits durch die erste Ein-/Ausgabebaugruppe 30 und die zweite Ein-/Ausgabebaugruppe 40 aufgebaute Linie zu ermöglichen, wird die vierte Datenschnittstelle 42, welche eine MDIX-Belegung aufweist, mit der fünften Datenschnittstelle 51, welche eine MDI-Belegung aufweist, über eine ebenfalls 1:1 verdrahtete dritte Datenleitung 55 verbunden.

Der Werkzeugwechsler 100 als Einheit betrachtet ist über die erste Ein-/Ausgabebaugruppe 30, mit ihrer entsprechenden ersten Datenschnittstelle 31 mit einer MDI-Belegung, über eine erste Datenleitung 33 mit dem Schnittstellenmodul 20 über den Modulausgang 29 verbunden. Der Modulausgang 29 weist dabei wiederum eine MDIX-Belegung auf.

Hingegen weist der Moduleingang 28 des Schnittstellenmoduls 20 eine MDI-Belegung auf. Über diesen Moduleingang 28 ist über einen Teil einer Hauptdatenleitung 21', mit einem Adapter 5 und weiterführend über den zweiten Teil der Hauptdatenleitung 21, die Steuerungsschnittstelle 11 der Steuerung 10 angeschlossen. Über den zuvor erläuterten Signalweg und die Linienstruktur hat die Steuerung 10 den Zugriff selbst in die weitest entfernte dezentrale Peripheriebaugruppe in dem Werkzeugwechsler 100, welche durch die dritte Ein-/Ausgabebaugruppe 50 repräsentiert wird.

Damit der Einsatz von 1:1 Ethernet-Datenleitungen im gesamten System ermöglicht wird, sind die jeweils erste, zweite, dritte, vierte, fünfte, sechste Datenschnittstelle 31, 32, 41, 42, 51, 52 derart konfiguriert, dass ein Kommunikationsmechanismus zum Aushandeln von Kommunikationsregeln, hier insbesondere einer Auto-Crossover-Funktion, inaktiv geschaltet ist. Nur bei der Steuerungsschnittstelle 11 und bei dem Moduleingang 28 ist der Kommunikationsmechanismus für die Auto-Crossover-Funktion aktiv geschaltet. Dies ist in der Zeichnung durch einen Punkt in den jeweiligen Schnittstellen gekennzeichnet.

Gemäß Figur 2 ist eine alternative Ausgestaltung des Automatisierungssystems 1 dargestellt. Bei dieser Ausgestaltungsvariante ist die Konfiguration und der Aufbau des Werkzeugwechslers 100 mit seinen Ein-/Ausgabebaugruppen identisch zu dem Aufbau in der Figur 1. Der Aufbau unterscheidet sich dahingehend, dass nun anstelle eines Schnittstellenmoduls 20 ein Vierfach-Switch 22 mit einem ersten Port 23, einem zweiten Port 24, einem dritten Port 25 und einem vierten Port 26 zwischen der Steuerung 10 und der ersten Datenschnittstelle 31 eingesetzt wird. In dieser Anlagenkonfiguration sind bei dem Switch 22 nur der dritte Port 25 und der vierte Port 26 belegt, wobei der dritte Port 25 wiederum, durch einen Punkt gekennzeichnet, mit einem aktiven Kommunikationsmechanismus konfiguriert ist. Der dritte Port 25 des Switches 22 steht über die Hauptdatenleitung 21 mit der Steuerungsschnittstelle 11, welche auch mit einem aktiven Kommunikationsmechanismus konfiguriert ist, in Verbindung. Der vierte Port 26 des Switches 22 ist über die erste Datenleitung 33 mit der ersten Datenschnittstelle 31 der ersten Ein-/Ausgabebaugruppe 30 verbunden.

Auch bei Einsatz eines Switches kann durch die unterschiedliche MDI-Belegung bzw. MDIX-Belegung der Datenschnittstellen der Ein-/Ausgabebaugruppen ein durchgängiger Einsatz von 1:1 verdrahteten Ethernet-Datenleitungen in einem Automatisierungssystem gewährleistet werden. Von besonderem Vorteil ist hierbei zu nennen, dass durch das Inaktiv-Schalten des Kommunikationsmechanismus, also der Auto-Crossover-Funktion, in den Ein-/Ausgabebaugruppen 30, 40, 50 eine Reaktionszeit des Werkzeugwechslers 100, insbesondere bei einem geforderten Fast-Startup-System, erheblich verkürzt werden kann.

## Patentansprüche

1. Automatisierungskomponente (30, 40, 50) mit zumindest einer ersten Datenschnittstelle (31) und einer zweiten Datenschnittstelle (32) zum Verschalten von weiteren Automatisierungskomponenten (30, 40, 50) in einer Linienstruktur,
**dadurch gekennzeichnet, dass** eine erste Signalbelegung für die erste Datenschnittstelle (31) eine MDI-Belegung und eine zweite Signalbelegung für die zweite Datenschnittstelle (32) eine MDIX-Belegung aufweist.

2. Automatisierungskomponente (30, 40, 50) nach Anspruch 1, wobei ein Kommunikationsmechanismus, welcher ein automatisches Aushandeln von Kommunikationsregeln ermöglicht, für die erste und die zweite Datenschnittstelle (31, 32) zur Verkürzung einer Reaktionszeit inaktiv konfiguriert ist.

3. Automatisierungskomponente (30, 40, 50) nach Anspruch 1 oder 2, mit Mitteln zur Ein- und Ausgabe von Datensignalen aus einem Automatisierungsprozess.

4. Automatisierungskomponente (30, 40, 50) nach Anspruch 3, wobei die Mitteln zur Ein- und Ausgabe als eine erste Ein-/Ausgabebaugruppe (30) für eine Werkzeugwechseleinheit (100) ausgestaltet sind.

5. Automatisierungskomponente (30, 40, 50) nach einem der Ansprüche 1 bis 4, wobei für die Datenschnittstellen (31, 32) Datenleitungen (33, 34) mit Datensteckern verwendbar sind, welche nach einer eins zu eins Beschaltungsvorschrift ausgestaltet ist.

6. Automatisierungssystem (1) zum automatisieren eines industriellen Prozesses, umfassend eine Steuerung (10), zumindest eine erste Ein-/Ausgabebaugruppe (30) und eine zweite Ein-Ausgabebaugruppe (40), eine erste Datenleitung (33), eine zweite Datenleitung (44) und Kommunikationsmitteln über welche die Steuerung (10) mittels der ersten Datenleitung (33) über eine erste Datenschnittstelle (31) der ersten Ein-/Ausgabebaugruppe (30) mit dieser in Verbindung steht, wobei eine zweite Datenschnittstelle (32) der ersten Ein-/Ausgabebaugruppe (30) über eine zweite Datenleitung (44) mit einer dritten Datenschnittstelle (41) der zweiten Ein- Ausgabebaugruppe (40) verbunden ist,
**dadurch gekennzeichnet, dass**
eine erste Signalbelegung für die erste Datenschnittstelle (31) eine MDI-Belegung und eine zweite Signalbelegung für die zweite Datenschnittstelle (32) eine MDIX-Belegung aufweist.

7. Automatisierungssystem (1) nach Anspruch 6, wobei ein Kommunikationsmechanismus innerhalb der Ein-/Ausgabebaugruppen (30, 40), welcher ein automatisches Aushandeln von Kommunikationsregeln ermöglicht, für die erste und die zweite Datenschnittstelle (31, 32) zur Verkürzung einer Reaktionszeit inaktiv konfiguriert ist.

8. Automatisierungssystem (1) nach Anspruch 6 oder 7, wobei eine Vielzahl von Ein- Ausgabebaugruppen (30, 40, 50) über ihre jeweils zwei Datenschnittstellen (31, 32, 41, 42, 51, 52) zu einer Linienstruktur kaskadenartig angeordnet sind.

9. Automatisierungssystem (1) nach einem der Ansprüche 6 bis 8, wobei zwischen der Steuerung (10) und der ersten Ein- Ausgabebaugruppe (30) ein Schnittstellenmodul (20) mit einem Moduleingang (28) und einem Modulausgang (29) angeordnet ist, wobei der Modulausgang (29) mit einer MDIX-Belegung und einem inaktiven Kommunikationsmechanismus ausgestaltet ist, welcher ein automatisches Aushandeln von Kommunikationsregeln ermöglicht, und der Moduleingang (28) mit einer MDI-Belegung mit einem aktiven Kommunikationsmechanismus ausgestaltet ist.

10. Automatisierungssystem (1) nach Anspruch 9, wobei zwischen der Steuerung (10) und dem Schnittstellenmodul (20) zur Anpassung einer Steuerungsschnittstelle (11) an den Moduleingang (28) ein Adapter (5) angeordnet ist.

11. Automatisierungssystem (1) nach einem der Ansprüche 6 bis 8, wobei zwischen der Steuerung (10) und der ersten Ein- Ausgabebaugruppe (30) ein Switch (22) mit einem dritten Port (25) und einem vierten Port (26) angeordnet ist, wobei der vierte Port (26) mit einer MDI-Belegung und einem inaktiven Kommunikationsmechanismus ausgestaltet ist, und der dritte Port (25) mit einer MDI-Belegung mit einem aktiven Kommunikationsmechanismus ausgestaltet ist.
